Europäisches Patentamt

European Patent Office

Office européen des brevets

(11) Publication number: **0 147 935**
**A1**

## (12) EUROPEAN PATENT APPLICATION

(21) Application number: **84307825.4**

(22) Date of filing: **13.11.84**

(51) Int. Cl.⁴: **F 16 D 55/224**

(30) Priority: **08.12.83 GB 8332791**

(43) Date of publication of application:
**10.07.85 Bulletin 85/28**

(84) Designated Contracting States:
**BE DE FR GB IT SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Haines, William Ernest**
**39 St. Mary's Close**
**Southam Warwickshire(GB)**

(74) Representative: **Cundy, Anthony Brian**
**Anthony Cundy & Company 384 Station Road Dorridge**
**Solihull West Midlands B93 8ES(GB)**

(54) Disc brakes.

(57) A disc brake comprises a fixed support 11 arranged to one side of a rotatable brake disc (not shown). A guide pin 15 is slidable in the support and extends parallel to the disc axis. First and second friction pads 33 and 34 are arranged one to each side of the disc. A caliper 18 has an hydraulic actuator 23 located on the same side of the disc as the support; the actuator thrusts the pin against the first pad and thereby thrusts that pad into frictional engagement with the disc during application of the brake. The caliper has two arms 19 which extend across the periphery of the disc to a reaction support 21 for the second pad 34 to bring it into frictional engagement with the disc on operation of the actuator. The first pad 33 is constrained against rotation with the disc by its engagement with the pin 15. The second pad 34 is constrained against rotation with the disc by its own engagement with the caliper 18 and by engagement of the caliper with the first pad which in turn is located by pin 15. Further constraining means including small pin 45 supported in caliper lugs 47 and 54 and in lug 49 of support 11 prevent tilting of the caliper with respect to the support.

./...

Croydon Printing Company Ltd.

EP 0 147 935 A1

FIG 1.

DISC BRAKES

The invention relates to disc brakes, primarily but not exclusively for use on motor vehicles.

One well established kind of disc brake comprises a fixed support arranged to one side of a rotatable brake disc, a caliper arranged to slide axially of the disc with respect to the fixed support, friction pads arranged one to each side of the disc and supported by the caliper and an actuator arranged to urge one pad into frictional engagement with the disc directly and also to cause the caliper to slide and bring the other friction pad into engagement with the opposite face of the disc. The pads have to be constrained against movement with frictional drag forces which would tend to rotate the pads with the disc. Normally the pads are held in the caliper in such a way that drag forces are transferred from the pads to the caliper and these drag forces are in turn then transferred from the caliper to the fixed support through the guide means which allows the caliper to slide. The loads due to the transfer of these drag forces can inhibit sliding and thereby interfere with smooth operation of the brake.

An object of the present invention is to provide a disc brake with an improved guide means for the caliper thereof.

In accordance with the present invention there is provided a disc brake comprising: a fixed support arranged wholly to one side of a rotatable brake disc; first and second friction pads arranged one to each side of the disc; and a caliper having an actuator located on the same side of the disc as the support and arranged to thrust the first pad into frictional engagement with the disc during application of the brake; the caliper extending across the periphery of the disc to provide a reaction support for the second pad to bring it into frictional engagement with the disc on application of the brake the second pad being constrained against rotation with the disc by its own engagement with the caliper wherein a guide pin is slidable in the fixed support such that the actuator thrusts on the first pad through the pin, a connection between the first pad and the pin is such that the pin constrains the pad against rotation with the disc, co-operating guide surfaces on the caliper and the first pad allow the caliper to slide axially of the disc with respect to the first pad but constrain it against rotation with the disc, and further constraining means are provided to prevent tilting of the caliper with respect to the support.

-Preferably the further constraining means includes a connection through the actuator between the caliper and the end of the pin remote from the first pad. Preferably the actuator is a hydraulic piston/cylinder unit and the pin engages in the piston thereof. The pin may have a ball-end engaged in the piston whereby the caliper together with its piston can be tilted with respect to the pin during assembly and disassembly of the brake. This tilting is also desirable in connection with replacement of worn pads.

A further pin may be provided parallel to the first pin and engaged with the fixed support and the caliper to constrain the caliper against movement about the axis of the first mentioned pin.

The further pin may also engage with at least one of the pads to hold the pad in the caliper. The pads may correspond in shape with each other and each have an apertured lug offset from the centre thereof such that the lugs are out of alignment when the pads are arranged face to face against the disc and the further pin may then be offset in the caliper to pass through one but only one of the apertured lugs.

Sealing means may extend between the actuator and the fixed support and between the pin and the fixed support on the side of the support away from the actuator whereby the pin and actuator are both sealed against ingress of dirt.

An embodiment of the invention will now be described by way of example only with reference to the the accompanying drawings in which:-

Figure 1 is an exploded pictorial view of the major components of an embodiment of the invention;

Figure 2 is a vertical section through the brake of figure 1, showing the brake in an assembled condition;

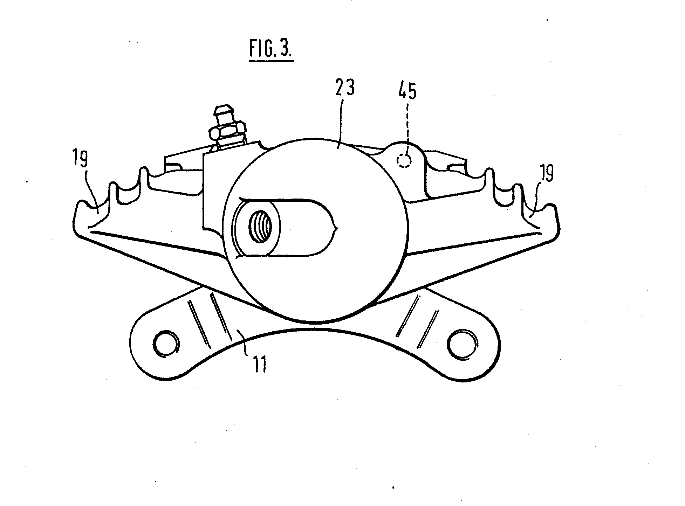

Figure 3 is an end view of the brake of figure 2 in the direction of arrow III;

and

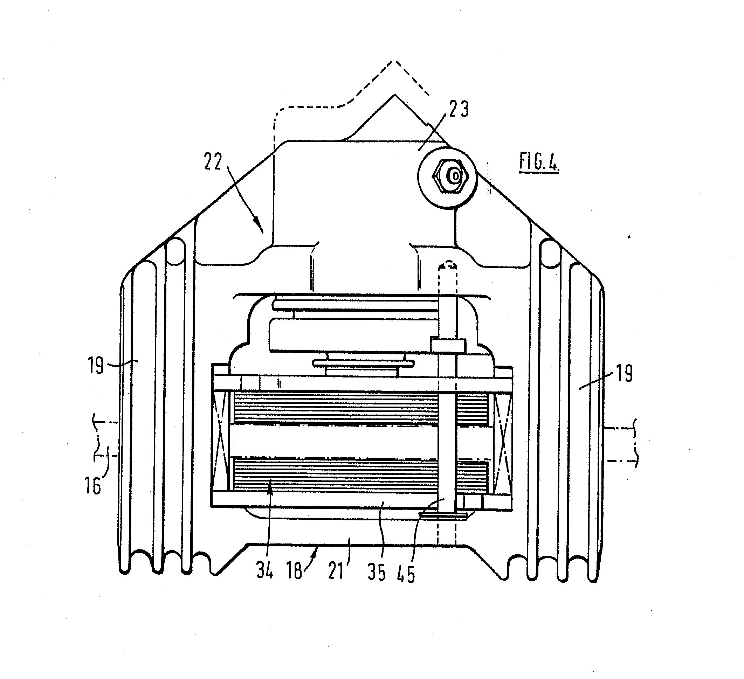

Figure 4 is a plan view of the brake of figure 2.

The brake is shown in the drawings in the conventional orientation for drawings of disc brakes but in practice it is more usual to install the brake in an orientation rotated through about 90° around the axis 17.

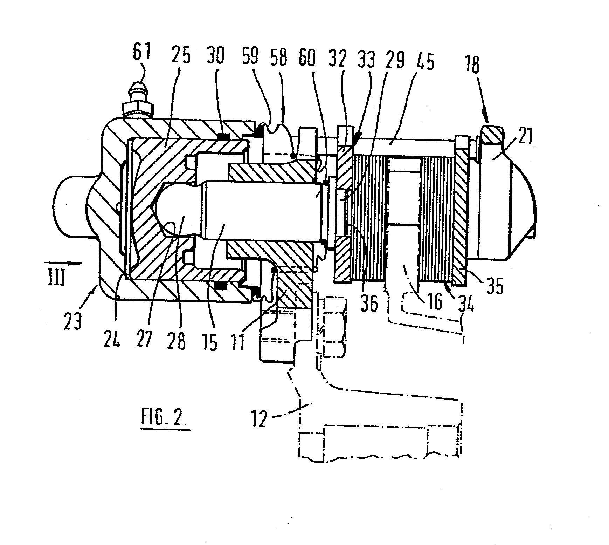

The brake shown in the drawings comprises a fixed support 11 which is intended to be bolted to motor vehicle wheel hub indicated diagrammatically at 12. The fixed support incorporates a boss 13 having a bore 14 within which a pin 15 can slide freely. Pin 15 lies parallel to but offset from the axis 17 of a rotary disc 16 to be braked. The disc 16 is shown in ghost in figure 2 as it does not form part of the brake as such.

A caliper comprises a generally rectangular structure incorporating two arms 19 which in use extend across the periphery of the disc 16 and connect an outer pad reaction member 21 to the main body 22 of the caliper which in turn incorporates a hydraulic actuator 23. The actuator comprises a cylinder bore 24 within which a piston 25 slides. The Usual hydraulic seal 30 is provided. Piston 25 incorporates a central recess 27 which receives a ball-shaped end portion 28 of pin 15.

The opposite end of pin 15 from ball-shaped end portion 28 carries a circular spigot 29 which in use engages a corresponding circular recess 36 in a back plate 32 of a first disc brake pad. A corresponding disc brake pad 34 with back plate 35 and another recess 36 is provided on the opposite side of the disc 16 from pad 33. Each pad incorporates two end guide surfaces, 37 for pad 33 and 38 for pad 34. The pads also have radial guide surfaces 39 for pad 33 and 41 for pad 34. In use, the pads are arranged within the rectangular opening of the caliper 18 in such a manner that end guide surfaces 37 and 38 co-operate with corresponding guide surfaces such as 42 on arms 19 while radial guide surfaces 39 and 41 co-operate with corresponding radial guide surfaces 43 and 44 on arms 19.

The brake also has a secondary pin 45 of much smaller diameter than the pin 15 and as will be explained subsequently, nearly all loads are carried by pin 15 whereas

0147935

secondary pin 45 is intended primarily to maintain certain components in appropriate alignment. Pin 45 passes through a series of apertures as follows: aperture 46 in lug 47 in the main body 22 of the caliper; aperture 48 in extension 49 of the fixed support; aperture 55 in lug 56 of pad 33; aperture 53 in lug 54 of the outer pad reaction member 21. It is convenient at this stage to observe that all of these apertures and lugs, whilst in alignment with each other, are offset to one side of a plane passing through disc axis 17 and the axis of pin 15. Pad 34 has aperture 51 in lug 52 corresponding with aperture 55 and the two pads are identical but because one pad is reversed so that both face the disc 16 from opposite sides, aperture 51 is offset from pin 45. A spring clip 57 holds pin 45 in position but pin 45 can be removed by sliding it axially in a rightward direction after removal of spring clip 57.

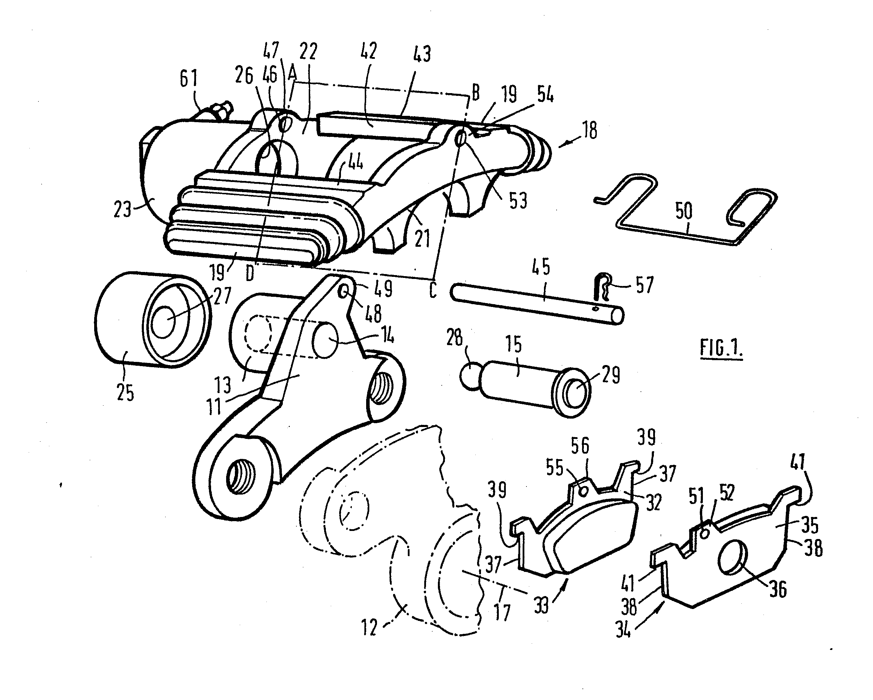

A flexible elastomeric dust sealing means 58 (not shown in figure 1 but see figure 2) is also provided between the otherwise open end of actuator 23 and the fixed support 11 and between the end portion of pin 15 and the fixed support 11. The single elastomeric seal 58 incorporates a portion 59 which seals the gap between the inner end of the cylinder and the fixed support 11. A second part 60 of the seal is effective between the fixed support and the pin 15 on the pad side of the support. The seal incorporates two apertures (not shown) through which parts of the fixed support 11 project and this engagement with the fixed support helps to hold the seal in sealing relationship with the fixed support.

In order to actuate the brake, the interior of the hydraulic actuator 23 is pressurised through a hydraulic connection 61 and this urges piston 25 towards the disc 16 with respect to the caliper 19. Piston 25 thrusts on pin 15 which in turn thrusts on pad 33. Simultaneously, the reaction force to this thrust urges the caliper 18 in the opposite direction so that the outer pad reaction member 21 thereof forces pad 34 into frictional engagement with the opposite face of the disc 16. In this way, the rotating disc 16 is clamped between pads 33 and 34 and as the pads are supported against rotation with the disc in a manner to be described, a frictional drag force is exerted on the disc 16 to provide braking action.

Drag force reaction for pad 33 is provided by the spigotted engagement 29 between pad 33 and pin 15. The reaction load is then transferred from pin 15 to the fixed support 11. For pad 34 corresponding brake reaction loads are transferred to the caliper due to the engagement between a pad end face 38 and a corresponding surface 42 on the caliper. The caliper itself is constrained with respect to the fixed support 11 against movement in the direction of the brake drag forces in a manner to be described and thus remains stably in position.

The primary location is provided by a surface 42 of the caliper bearing against an end face 37 of the pad 33 and from there load can be transferred to the fixed support as previously explained. The second location is provided by means of the engagement of end portion 28 of pin 15 in recess 27 of piston 25. The load is of course transferred from the caliper through the sliding surfaces between piston 25 and cylinder bore 24. One effect of the ball connection 27, 28 is to prevent the piston axis being twisted in its bore which would tend to prevent free sliding movement. Because the two pads are close to each other and to spigot 29 as compared with the length of pin 15 to the ball-shaped end portion 28, most of the total load is transferred through pad 33. These spaced locations of the caliper prevent it from pivotting in a horizontal plane (as shown).

In the absence of pin 45, the caliper would be free to rotate about the axis of pin 15 but the engagement of pin 45 with both the caliper and the fixed support constrains the caliper against this rotation. Very little load is involved in resisting rotation about the axis of pin 15 so pin 45 takes very light loads and requires very little strength. It is also necessary to constrain the caliper against vertical pivotal movement (as shown) of the caliper axis with respect to the axis of pin 15. This constraint is also provided by engagement of pin 45 with both the caliper and the fixed support.

0147935

It is also necessary to ensure that the pads 33 and 34 are constrained against falling out of the caliper in a direction away from the disc axis. The spigot arrangement 29, 31 provides such constraint for pad 33. Pad 34 is held by an anti-rattle hold down clip 50 (figure 1) in conjunction with pin 45.

When the pads 33 and 34 have worn and require replacement, it is a simple matter to extract spring clip 57, withdraw auxiliary pin 45 in a rightward direction and then simply lift out pad 34. This allows axial space to slide the caliper in a leftward direction, release the spigotted connection 29, 31 and remove pad 33. After retracting piston 25 to provide additional space for unworn pads, assembly is the reverse of withdrawl of the pads.

An attractive feature of this design is that high loads associated with braking forces are transmitted to the fixed support through pin 15 which can easily be made of such a size and design as to transmit such loads whereas only much smaller stabilising loads are associated with the secondary pin 45 and this pin provides a pad retention function as well as a stabilising function. Because pin 45 and its associated lugs and apertures are offset from a central position, they can be well clear of the outer diameter of the actuator without encroaching unduly on the space taken where the brake straddles the disc 16.

This helps to allow relatively large discs to be incorporated within relatively small road wheels.

CLAIMS

1.        A disc brake comprising:  a fixed support (11) arranged wholely to one side of a rotatable brake disc; first and second friction pads (33 and 34) arranged one to each side of the disc;  and a caliper (18) having an actuator (23) located on the same side of the disc as the support and arranged to thrust the first pad (33) into frictional engagement with the disc during application of the brake;  the caliper extending across the periphery of the disc to provide a reaction support (21) for the second pad(34) to bring it into frictional engagement with the disc on application of the brake;  the second pad being constrained against rotation with the disc by its own engagement with the caliper characterised by the provision of a guide pin (15) slidable in the fixed support such that the actuator thrusts on the first pad through the pin, a connection (29) between the first pad and the pin such that the pin constrains the pad against rotation with the disc, co-operating guide surfaces (42 and 37) on the caliper and the first pad such that the caliper can slide axially of the disc with respect to the first pad but is constrained thereby against rotation with the disc, and further constraining means (28, 27 and 45, 46, 55, 54) to prevent tilting of the caliper with respect to the support.

2.        A disc brake according to claim 1 characterised in that the further constraining means includes a connection through the actuator (23) between the caliper and the end (28) of the pin remote from the first pad.

3.      A disc brake as in claim 2 characterised in that the actuator (23) is a hydraulic piston/cylinder unit and the pin engages in the piston (25) thereof.

4.      A disc brake according to claim 3 characterised in that the pin has a ball-end (28) engaged in the piston (25) whereby the caliper together with the actuator can be tilted with respect to the pin during assembly and disassembly of the brake.

5.      A disc brake according to any one of the preceding claims characterised by a further pin (45) parallel to the first mentioned pin (15) engaged with the fixed support (11) and with the caliper (18) to constrain the caliper against movement about the axis of the first mentioned pin.

6.      A disc brake according to claim 5 characterised in that the further pin also engages with at least one of the pads (33) to hold that pad in the caliper.

7.      A disc brake according to claim 6 characterised in that the pads (33 and 34) correspond in shape with each other and each has an apertured lug (56 or 52) offset from the centre thereof such that the lugs are out of alignment when the pads are arranged face to face against the disc and wherein the further pin (45) is offset in the caliper to pass through one (56) but only one of the apertured lugs in the pads.

8.     A disc brake according to any one of the preceding claims characterised by a sealing means (58) extending between the actuator and the fixed support and between the pin and the fixed support on the side of the support away from the actuator whereby the pin and actuator are both sealed against ingress of dirt.

0147935

FIG.1.

FIG. 2.

0147935

FIG.3.

22

23

FIG.4.

19

19

16

34 18 21 35 45

0147935

| | DOCUMENTS CONSIDERED TO BE RELEVANT | | EP 84307825.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | DE - A1 - 2 834 100 (GIRLING LTD.) | 1,8 | F 16 D 55/224 |
| A | * Fig. 1,6,10 * | 3 | |
| | -- | | |
| A | DE - A - 2 421 545 (NISSAN MOTOR CO. LTD.) | | |
| | * Totality * | | |
| | -- | | |
| A | DE - A1 - 2 427 111 (S.A. D.B.A., CLICHY) | | |
| | * Totality * | | |
| | -- | | |
| A | US - A - 3 889 785 (HORI) | | |
| | * Totality * | | |
| | ---- | | |

| | TECHNICAL FIELDS SEARCHED (Int. Cl.4) |
|---|---|
| | F 16 D 55/224 |
| | F 16 D 65/18 |

The present search report has been drawn up for all claims

| Place of search | Date of completion of the search | Examiner |
|---|---|---|
| VIENNA | 28-02-1985 | KAMMERER |